# FASCICULE DE BREVET EUROPEEN

(11) **EP 0 597 750 B1**
(45) Date de publication et mention de la délivrance du brevet: **18.12.1996**
(21) Numéro de dépôt: 93402637.8
(22) Date de dépôt: 27.10.1993
(51) Int. Cl.: B64G 1/64, B64D 1/04

(54) **Dispositif de maintien puis d'écartement, selon une séquence contrôlée, d'un objet par rapport à un support**
Gerät zum Halten und Auswerfen eines Objekts bezüglich eines Trägers, mit einer kontrollierten Ablauffolge
Apparatus for holding and ejecting an object relative to a support following a controlled sequence

(30) Priorité: 09.11.1992 FR 9213468
(43) Date de publication de la demande: 18.05.1994
(73) Titulaire: AEROSPATIALE Société Nationale Industrielle, 75781 Paris Cédex 16 (FR)
(72) Inventeur: Herman, Philippe, F-33160 Saint Medard en Jalles (FR); Pavec, Jean-Luc, F-33460 Margaux (FR)
(74) Mandataire: Rinuy, Santarelli

(56) Documents cités:
- EP-A- 0 363 242
- EP-A- 0 454 564
- FR-A- 2 616 856
- US-A- 3 196 745
- US-A- 4 187 760

## Description

L'invention concerne l'assujettissement temporaire d'un objet à un support, la libération rapide de cet objet puis son éjection contrôlée selon une direction prédéterminée.

Elle se place avantageusement, mais de façon non exclusive, dans le domaine des engins spatiaux, notamment satellites, par exemple pour le largage de microsatellites à partir d'un lanceur ou d'un satellite plus gros. L'invention peut toutefois s'appliquer également à divers engins terrestres, maritimes (navires de surface ou sous-marins) et aériens (aéronefs en tous genres) dans lesquels on établit une liaison temporaire que l'on souhaite supprimer à un quelconque moment donné, avec mise en mouvement prompte et précise de l'objet considéré (par exemple pour son lancement sans guidage extérieur).

C'est ainsi que l'invention peut notamment s'appliquer à la réalisation d'expériences scientifiques dans la haute atmosphère terrestre ou à l'exploration des planètes du système solaire à partir d'une sonde automatique. Elle peut par exemple servir à éjecter un réservoir contenant une substance chimique destinée à servir de traceur pour étudier les vents ou les champs magnétiques : il est ainsi possible d'éjecter un tel réservoir à partir d'une plate-forme artificielle, telle qu'une fusée-sonde ou une sonde planétaire.

On connaît déjà divers mécanismes assurant un tel assujettissement temporaire suivi d'une séparation rapide avec une éjection plus ou moins forte, pour assurer au moins une bonne séparation relative entre l'objet et son support.

On peut ainsi citer notamment les documents US-4.554.905, WO-82/02527, US-3.887.150, US-2.888.294, US-3.196.745, US-3.597.919, US-4.002.120 ou US-4.187.759.

En pratique ces documents proposent d'utiliser une énergie de déverrouillage ou de séparation du type pression. Cette énergie peut être par exemple pneumatique, hydraulique ou pyrotechnique suivant les utilisations. Dans le cas particulièrement important d'une énergie pyrotechnique, on tire profit des effets pneumatiques produits par la combustion d'une substance explosive.

Une énergie de type pyrotechnique se retrouve également dans des dispositifs de séparation du type boulons explosifs, découpeurs à charge ou systèmes pyrotechniques de déverrouillage par effacement d'une butée. Ils leur sont le plus souvent associés des pistons d'écartement.

Dans leur ensemble les divers documents précités ne se préoccupent guère du mouvement ultérieur de l'objet.

On connaît par ailleurs le document FR-2.616.856 qui vise un mécanisme permettant de commander l'écartement d'une pièce par rapport à son support avec lequel elle est initialement en contact, en maîtrisant parfaitement la vitesse et l'accélération d'éjection. Ce document enseigne, pour appliquer à l'objet à éjecter une quantité d'énergie bien définie, d'interposer entre un organe moteur et le piston un élément élastique de type ressort ou capacité gazeuse.

On connaît également le document FR-2.661.465 qui vise un dispositif d'assemblage mécanique temporaire et de séparation rapide d'un objet initialement lié à un support. De manière à bien contrôler l'amplitude et l'orientation de la vitesse d'éjection, il y est enseigné que la tige d'éjection prenne appui sur l'objet à éjecter auprès du centre de masse de ce dernier tandis que le réceptacle dans lequel coulisse la tige d'éjection est fixé à cet objet auprès de l'embouchure du logement ménagé dans l'objet pour permettre à la tige d'éjection l'accès au centre de gravité. En outre, sont prévues dans l'objet des zones de centrage auprès de la portée d'appui et de l'embouchure, respectivement.

On connaît enfin le document EP-0.363.242 qui concerne un dispositif de solidarisation/désolidarisation provisoire de deux éléments l'un à l'autre, et de séparation ultérieure. En vue de permettre plusieurs cycles de solidarisation/désolidarisation, ce dispositif comporte, dans un corps creux lié à l'un des éléments, un manchon de retenue adapté à se rétracter radialement sur un élément mâle lié à l'autre élément ou au contraire à s'en écarter pour le libérer, un piston coulissant mobile dans ce corps creux pour, en collaboration avec un étui coulissant sur ce piston et sur le manchon, manoeuvrer le manchon de retenue entre ses deux configurations, et un doigt d'éjection fixé à l'intérieur du piston coulissant par un organe frangible. A l'allumage d'une charge pyrotechnique la forte pression ainsi générée agit, d'une part, sur le piston coulissant et l'étui en sorte d'écarter le manchon de retenue et, d'autre part, sur le doigt d'éjection pour lui faire appliquer à l'élément mâle, dès rupture de l'organe frangible, une poussée.

Ces dernières solutions ont donné et donnent encore satisfaction.

L'invention vise toutefois, dans de tels dispositifs assurant une triple fonction de maintien, libération et d'éjection, un meilleur contrôle de la séquence libération/-éjection, propre à garantir que la libération est bien achevée lors de l'application de la poussée d'éjection et éliminer ainsi tout effet parasite de l'opération de libération sur la qualité de l'éjection.

En effet, dans le dispositif du document EP-0.363.242, les opérations de libération et d'éjection ne sont en pratique pas vraiment décalées dans le temps, le doigt d'éjection pouvant, selon la résistance de l'organe frangible et le régime de détonation, appliquer sa poussée sur l'élément mâle avant que celui-ci soit complètement libéré ou au contraire avec un certain retard après l'achèvement de cette libération. En ce qui concerne le dispositif du document FR-2.661.465, c'est la poussée d'éjection qui provoque la rupture de la liaison frangible et donc la libération. Enfin, dans le dispositif du document FR-2.616.856, l'élément élastique par l'intermédiaire duquel la poussée appliquée à l'organe moteur est transmise au piston d'éjection assure parfois un amortissement de l'effort de poussée et un décalage plus ou moins bien contrôlé dans le temps dépendant notamment de la précontrainte (cas d'un ressort) ou de la pression (cas d'une capacité pneumatique) de l'élément élastique, laquelle peut avoir diminué au cours d'un éventuel stockage du fait d'un vieillissement ou de fuites.

L'invention a ainsi pour objet un dispositif ayant la triple fonction de maintien temporaire, de libération puis d'éjection d'un objet par rapport à un support, dont la phase de poussée ait lieu après la phase de libération, après un intervalle de temps bien contrôlé, non nul mais éventuellement très petit (de l'ordre de la milliseconde typiquement de l'ordre de 8 à 15 milli-secondes - ) qui soit de structure simple et compacte et de fonctionnement aisé.

L'invention propose ainsi un dispositif d'assujettissement temporaire d'un objet à un support, puis de libération et d'éjection de cet objet selon une direction prédéterminée, comportant :
- un réceptacle destiné à être fixé au support et présentant intérieurement une première paroi allongée selon cette direction,
- un manchon de retenue ayant une configuration de maintien dans laquelle l'objet est attelé longitudinalement au support par coopération de ce manchon de retenue avec des portées de retenue liées respectivement à l'objet et au support et une configuration de libération dans laquelle ce manchon est transversalement à l'écart au moins vis à vis des portées liées soit à l'objet, soit au support,
- une cheminée allongée selon ladite direction délimitant avec ladite première paroi, un logement annulaire et entourant un espace central allongé selon cette direction en ayant une extrémité ouverte située près du manchon de retenue et une extrémité fermée, cet espace central communiquant transversalement avec ce logement annulaire par au moins un orifice,
- un piston de manoeuvre comportant un élément tubulaire coulissant longitudinalement dans ce logement annulaire et un disque transversal ayant une première face de poussée bordant à l'intérieur de la première paroi une première chambre de pression destinée à communiquer avec une source de pression, ce piston de manoeuvre étant mobile longitudinalement entre une configuration de verrouillage dans laquelle l'élément tubulaire maintient transversalement le manchon de retenue dans sa configuration de maintien et une configuration de déverrouillage dans laquelle cet élément tubulaire laisse le manchon de retenue libre de venir dans sa configuration de libération, la pression dans la première chambre de pression agissant sur la première face de poussée dans un sens propre à déplacer le piston de manoeuvre vers sa configuration de déverrouillage,
- un piston d'éjection coulissant longitudinalement dans l'espace central et comportant une deuxième face de poussée délimitant avec l'extrémité fermée de cet espace central une seconde chambre de pression dont la pression agit sur cette seconde face de poussée dans un sens propre à exercer sur l'objet une poussée d'éjection,
ce dispositif étant caractérisé en ce que la cheminée est fixe et le piston de manoeuvre comporte, décalées longitudinalement, une portion pleine isolant de façon étanche l'orifice vis à vis de la première chambre de pression lorsque ce piston de manoeuvre est dans la configuration de verrouillage, et une portion évidée mettant l'orifice en communication avec la première chambre lorsque ce piston de manoeuvre est dans la configuration de déverrouillage.

On appréciera notamment que, par rapport au document FR-2.616.856 notamment en ce qui concerne son mode de réalisation à capacité gazeuse, la pression générée à l'allumage agit successivement, mais directement, sur le piston tubulaire de libération puis sur le piston d'éjection, ce qui garantit l'application sur ce dernier d'un front de pression plus net que dans ce document antérieur.

Selon des caractéristiques préférées :
- le manchon de retenue est formé d'une pluralité annulaire de secteurs entourant lesdites portées de l'objet et du support,
- la pluralité de secteurs et les portées sont des filetages,
- le disque transversal du piston de manoeuvre est une collerette annulaire s'étendant en saillie vers l'intérieur de l'élément tubulaire, et coulissant le long d'un tronçon longitudinal s'étendant à partir de l'extrémité fermée de la cheminée à l'opposé de l'objet,
- à l'intérieur de ce tronçon longitudinal est ménagée une chambre centrale reliée à la source de pression et communiquant avec la première chambre de pression par au moins un orifice,
- la portion évidée est une portion amincie décalée transversalement vis à vis de la cheminée sur une distance longitudinale au moins égale à l'écart longitudinal entre les orifices de la seconde chambre de pression et la première chambre de pression,
- la première chambre de pression est transversalement à l'extérieur de l'élément tubulaire et la portion évidée comporte des trous traversants,
- une goupille est fixée transversalement au réceptacle et traverse l'élément tubulaire du piston de manoeuvre à la faveur d'une lumière globalement longitudinale, la cheminée, et pénètre dans une rainure globalement longitudinale,
- la rainure globalement longitudinale est hélicoïdale.

Des objets, caractéristiques et avantages de l'invention ressortent de la description qui suit, donnée à titre d'exemple non limitatif, en regard des dessins annexés sur lesquels :
- la figure 1 est une vue en coupe axiale d'un dispositif selon l'invention en configuration de maintien, et
- la figure 2 est une vue en coupe axiale de ce même dispositif, dans sa configuration de libération juste avant éjection.

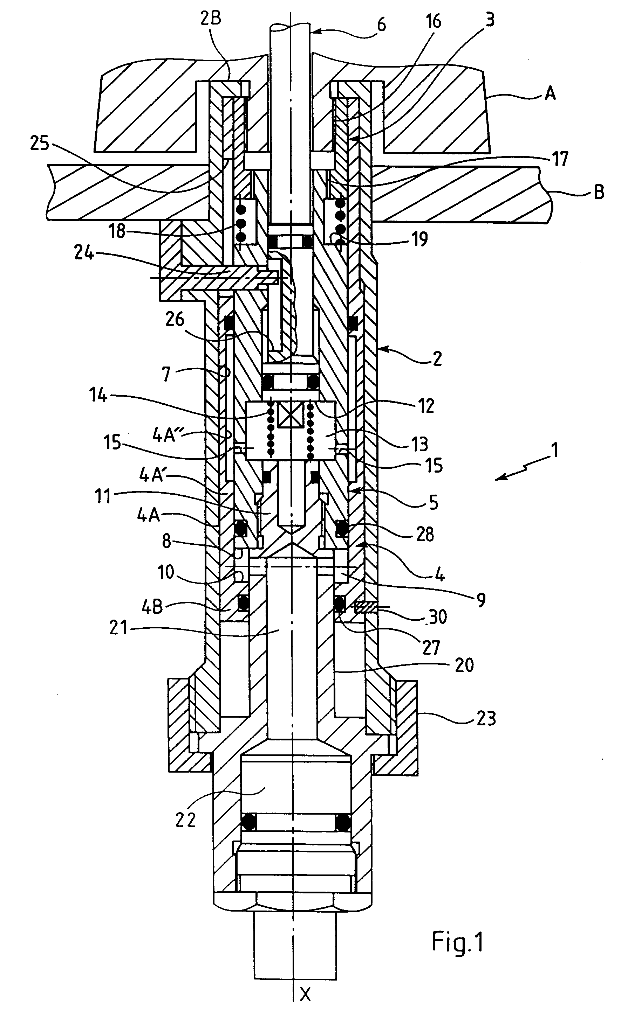

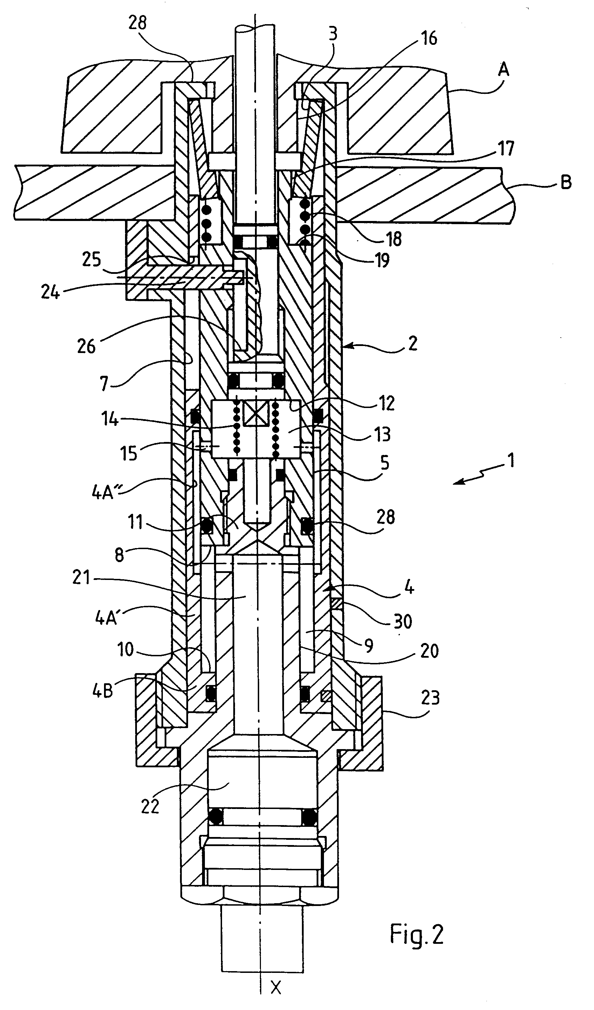

Les figures 1 et 2 décrivent un dispositif, désigné dans son ensemble par la référence 1, adapté à maintenir temporairement un objet schématisé en A sur un support schématisé en B, puis, en réponse à un ordre de déclenchement, à libérer puis éjecter cet objet A selon une direction X-X.

Ce dispositif 1 comporte principalement un réceptacle 2, un manchon de retenue 3, un piston de manoeuvre 4, une cheminée 5 et un piston d'éjection 6.

Le réceptacle 2 comporte ici un corps tubulaire définissant une paroi interne 7 allongée selon la direction X-X délimitant un logement contenant les autres éléments. Ce réceptacle 2 est fixé par tout moyen connu approprié au support B.

La cheminée 5 est un corps tubulaire allongé selon la direction X-X et disposé à l'intérieur de la paroi interne 7 en sorte de délimiter avec cette dernière un espace formé de deux logements décalés longitudinalement raccordés par un épaulement transversal 8 et ayant ainsi, transversalement à la direction X-X, des dimensions différentes. Cet épaulement transversal 8 est ici ménagé sur la paroi externe de la cheminée 5. Bien entendu, en variante non représentée, cet épaulement peut être ménagé sur la paroi interne 7. Cet épaulement est ici orienté à l'opposé de l'objet A de sorte que le logement, annulaire, le plus proche de l'objet, appelé premier logement, est plus étroit que le logement, appelé second logement, disposé à l'opposé de l'objet par rapport au premier logement.

Dans cet espace coulisse, longitudinalement, le piston de manoeuvre 4 qui est formé d'un élément tubulaire longitudinal 4A disposé dans le premier logement en en occupant toute la largeur transversale, et d'un disque transversal 4B disposé dans le second logement en en occupant toute la largeur transversale. Ce piston de manoeuvre détermine ainsi, avec la paroi interne 7 et la cheminée 5, une première chambre de pression 9 de volume variable, le disque transversal ayant une première face de poussée 10 sur laquelle agit la pression régnant dans cette première chambre de pression.

La cheminée 5 délimite intérieurement un espace central allongé selon la direction X-X, ayant une extrémité ouverte située en regard de l'objet et une extrémité fermée munie d'un fond 11.

Dans cet espace central est disposé, monté coulissant, le piston d'éjection 6 qui présente une face de poussée 12 délimitant, avec le fond 11, à l'intérieur de la cheminée 5, une seconde chambre de pression 13. Ce piston d'éjection 6 comporte une tige propre à appliquer à l'objet une poussée d'éjection lorsqu'un front de pression pénètre dans cette seconde chambre. De manière classique, cette tige est terminée par une extrémité (non représentée) en contact avec une portée d'appui de l'objet, par exemple auprès du centre de masse de cet objet. Un ressort 14 est avantageusement prévu, entre le piston d'éjection et le fond de la cheminée, pour appliquer à l'objet une précontrainte lors de son maintien.

Cette seconde chambre de pression 13 communique avec le premier logement, transversalement à la direction X-X, par au moins un orifice 15.

Le manchon de retenue 3 coopère avec des portées 16 et 17 voisines, liées respectivement à l'objet et au support. Ces portées sont ici longitudinalement en regard et le manchon les entoure. En variante non représentée, les portées, soit de l'objet soit du support, sont transversalement à l'extérieur du manchon (voir par exemple le document FR-2.616.856 précité). Ce manchon de retenue 3 est ici formé d'une pluralité d'au moins deux (en pratique trois) secteurs de cylindre séparés par des fentes longitudinales grâce à quoi ce manchon admet une configuration de maintien dans laquelle il est en prise avec les portées 16 et 17 et assure donc un attelage longitudinal de l'objet au support et une configuration de libération (voir la figure 2) dans laquelle ce manchon est au moins transversalement à l'écart vis à vis des portées de l'objet ou du support.

Ces portées 16 et 17 sont par exemple, dans une version simple de réalisation, des portions filetées coopérant avec un filetage ménagé à l'intérieur du manchon.

La portée 16 est ici ménagée sur un embout de l'objet tandis que la portée 17 est ménagée sur l'extrémité ouverte de la cheminée 15.

L'élément tubulaire 4A du piston de manoeuvre 4 se termine, à l'opposé du disque transversal 4B, par une portion terminale adaptée à maintenir latéralement le manchon de retenue contre les portées, donc dans sa configuration de maintien.

Le réceptacle 2 comporte à l'extrémité ouverte de son logement, c'est-à-dire auprès de l'objet, une collerette transversale 2B longitudinalement en regard du manchon de retenue.

Un ressort 18 est comprimé entre un épaulement 19 du réceptacle et le manchon de retenue en sorte de l'appliquer contre la collerette. En outre, ce ressort sollicite le manchon de retenue vers sa configuration de libération lorsque l'extrémité de l'élément tubulaire 4A du piston de manoeuvre cesse de confiner ce manchon de retenue (voir figure 2).

Ce piston de manoeuvre 4 peut ainsi coulisser longitudinalement entre une configuration de verrouillage (figure 1) dans laquelle son élément tubulaire maintient transversalement le manchon de retenue dans sa configuration de maintien et une configuration de déverrouillage dans laquelle ce manchon est libre de s'écarter (ici sous l'action notamment du ressort 18) et de venir dans sa configuration de libération.

La pression régnant dans la première chambre de pression 9 agit sur la face de poussée 10 de ce piston de manoeuvre dans un sens propre à déplacer ce dernier vers sa configuration de déverrouillage.

La cheminée 5 est avantageusement fixée au réceptacle par un tronçon longitudinal 20 prolongeant la cheminée, à partir de son fond 11, à l'opposé de l'objet, conférant ainsi au second logement défini à l'intérieur du réceptacle une forme annulaire.

Dans l'exemple considéré ici, où la surface de poussée 10 du piston de manoeuvre est transversalement à l'intérieur de l'élément tubulaire 4A, ce tronçon longitudinal 20 comporte avantageusement une chambre centrale 21 dans laquelle un inflammateur 22, fixé au réceptacle, peut générer un front de pression. Des orifices mettent cette chambre en communication avec la première chambre de pression 9, même quand celle-ci a son volume minimum (ces orifices sont donc, dans ce cas, situés à proximité de l'épaulement 8).

Pour des raisons pratiques, la partie tubulaire de la cheminée est vissée sur l'extrémité du tronçon 20, matérialisant le fond 11, ce tronçon 20 étant lui-même fixé au réceptacle par une bague de vissage 23.

En travers du logement annulaire normalement occupé par l'élément tubulaire 4A du piston de manoeuvre, est disposée une goupille 24, fixée au réceptacle traversant cet élément tubulaire à la faveur d'une lumière globalement longitudinale 25, traversant la partie tubulaire de la cheminée (participant donc ici à sa fixation) et pénétrant dans le piston d'éjection à la faveur d'une rainure globalement longitudinale 26 de longueur donnée, ce qui délimite un débattement en coulissement aussi bien pour le piston de manoeuvre 4 que pour le piston d'éjection 6. La lumière 25 et la rainure 26 peuvent être hélicoïdales en sorte de donner un mouvement de rotation à l'objet.

L'élément tubulaire 4A du piston de manoeuvre 4 comporte, décalées longitudinalement, une portion pleine 4A' isolant de façon étanche les orifices 15 vis à vis de la première chambre de pression 9 lorsque ce piston de manoeuvre est dans la configuration de verrouillage, ainsi qu'une portion évidée 4A'' mettant ces orifices 15 en communication avec la première chambre de pression lorsque ce piston de manoeuvre vient dans sa configuration de déverrouillage.

Des joints d'étanchéité 27 et 28 sont disposés longitudinalement de part et d'autre de cette première chambre 9.

La portion 4A'' est ici une portion évidée intérieurement (c'est-à-dire en regard de la cheminée) sur une distance longitudinale au moins égale à l'écartement longitudinal entre les orifices 15 et la première chambre 9. Cette portion évidée s'étend ici tout autour de la cheminée. Il suffirait bien sûr (mais la mise en communication serait peut être moins rapide et nette) que cette portion évidée ne s'étende que sur un secteur.

En variante non représentée, si la première chambre de pression était transversalement à l'extérieur de l'élément tubulaire, cette portion évidée comporterait des orifices traversant (avec d'éventuels décrochements longitudinaux) toute l'apaisseur de cet élément tubulaire.

En fonctionnement, on monte l'objet (par exemple un micro-satellite) et on met en place le manchon de retenue 3. Le maintien de l'objet est sous précontrainte à cause des ressorts 14 et 18.

A la mise à feu de l'inflammateur 22, les gaz chauds émis induisent une montée en pression de la chambre 9. Après rupture d'une éventuelle goupille frangible 30 de blocage, ces gaz repoussent le piston de manoeuvre 4 vers le bas, provoquant, selon une séquence automatiquement synchronisée :
- la libération de l'objet,
- en fin de déplacement (figure 2), la mise en communication de la première chambre 9 avec la seconde chambre 13, entraînant une pression sur le piston 6 et l'éjection du micro-satellite.

La goupille 24 induit sur la tige un éventuel mouvement hélicoïdal, lequel est transmis à l'objet par tout moyen approprié, ne serait-ce que par frottement.

On appréciera que ce fonctionnement synchronisé est obtenu à l'aide d'un dispositif simple et compact.

Il va de soi que la description qui précède n'a été proposée qu'à titre d'exemple non limitatif et que de nombreuses variantes peuvent être proposées par l'homme de l'art sans sortir du cadre de l'invention défini par les revendications. Ainsi en particulier le deuxième logement ménagé dans le réceptacle peut s'étendre, sous le fond de la cheminée, sur toute la section du réceptacle, la fixation de la cheminée se faisant par exemple par des doigts radiaux.

Les divers éléments 3, 4, 5, 6 et 7 sont avantageusement cylindriques (section circulaire) mais d'autres formes (polygonales par exemple) sont possibles.

## Revendications

1. Dispositif d'assujettissement temporaire d'un objet (A) à un support (B), puis de libération et d'éjection de cet objet selon une direction prédéterminée (X-X), comportant :
- un réceptacle (2) destiné à être fixé au support et présentant intérieurement une première paroi (7) allongée selon cette direction,
- un manchon de retenue (3) ayant une configuration de maintien dans laquelle l'objet est attelé longitudinalement au support par coopération de ce manchon de retenue avec des portées de retenue (16, 17) liées respectivement à l'objet et au support et une configuration de libération dans laquelle ce manchon est transversalement à l'écart au moins vis à vis des portées liées soit à l'objet, soit au support,
- une cheminée (5) allongée selon ladite direction délimitant avec ladite première paroi (7), un logement annulaire et entourant un espace central allongé selon cette direction en ayant une extrémité ouverte située près du manchon de retenue et une extrémité fermée (11), cet espace central communiquant transversalement avec ce logement annulaire par au moins un orifice (15),
- un piston de manoeuvre (4) comportant un élément tubulaire (4A) coulissant longitudinalement dans ce logement annulaire et un disque transversal (4B) ayant une première face de poussée bordant à l'intérieur de la première paroi une première chambre de pression (9) destinée à communiquer avec une source de pression, ce piston de manoeuvre étant mobile longitudinalement entre une configuration de verrouillage dans laquelle l'élément tubulaire maintient transversalement le manchon de retenue dans sa configuration de maintien et une configuration de déverrouillage dans laquelle cet élément tubulaire laisse le manchon de retenue libre de venir dans sa configuration de libération, la pression dans la première chambre de pression agissant sur la première face de poussée dans un sens propre à déplacer le piston de manoeuvre vers sa configuration de déverrouillage,
- un piston d'éjection (6) coulissant longitudinalement dans l'espace central et comportant une deuxième face de poussée (12) délimitant avec l'extrémité fermée de cet espace central une seconde chambre de pression (13) dont la pression agit sur cette seconde face de poussée dans un sens propre à exercer sur l'objet une poussée d'éjection,
ce dispositif étant caractérisé en ce que la cheminée (5) est fixe et le piston de manoeuvre comporte, décalées longitudinalement, une portion pleine isolant de façon étanche l'orifice vis à vis de la première chambre de pression lorsque ce piston de manoeuvre est dans la configuration de verrouillage, et une portion évidée mettant l'orifice en communication avec la première chambre lorsque ce piston de manoeuvre est dans la configuration de déverrouillage.

2. Dispositif selon la revendication 1, caractérisé en ce que le manchon de retenue est formé d'une pluralité annulaire de secteurs entourant lesdites portées (16, 17) de l'objet et du support.

3. Dispositif selon la revendication 2, caractérisé en ce que la pluralité de secteurs et les portées sont des filetages.

4. Dispositif selon l'une quelconque des revendications 1 à 3, caractérisé en ce que le disque transversal (4B) du piston de manoeuvre (4) est une collerette annulaire s'étendant en saillie vers l'intérieur de l'élément tubulaire, et coulissant le long d'un tronçon longitudinal (20) s'étendant à partir de l'extrémité fermée de la cheminée à l'opposé de l'objet.

5. Dispositif selon la revendication 4, caractérisé en ce qu'à l'intérieur de ce tronçon longitudinal est ménagée une chambre centrale (21) reliée à la source de pression (22) et communiquant avec la première chambre de pression (9) par au moins un orifice.

6. Dispositif selon la revendication 4, caractérisé en ce que la portion évidée est une portion amincie décalée transversalement vis à vis de la cheminée sur une distance longitudinale au moins égale à l'écart longitudinal entre les orifices (15) de la seconde chambre de pression (13) et la première chambre de pression (9).

7. Dispositif selon l'une quelconque des revendications 1 à 3, caractérisé en ce que la première chambre de pression est transversalement à l'extérieur de l'élément tubulaire et la portion évidée (4A'') comporte des trous traversants.

8. Dispositif selon l'une quelconque des revendications 1 à 7, caractérisé en ce qu'une goupille (24) est fixée transversalement au réceptacle et traverse l'élément tubulaire du piston de manoeuvre à la faveur d'une lumière globalement longitudinale (25), la cheminée, et pénètre dans une rainure globalement longitudinale (26).

9. Dispositif selon la revendication 8, caractérisé en ce que la rainure globalement longitudinale est hélicoïdale.

## Claims

1. Device for temporarily attaching an object (A) to a support (B) and for then releasing and ejecting said object in a predetermined direction (X-X), comprising:
- a receptacle (2) adapted to be fixed to the support and having an inside first wall (7) elongate in said direction,
- a retaining sleeve (3) having a retaining configuration in which the object is coupled longitudinally to the support by cooperation of said retaining sleeve with retaining bearing surfaces (16, 17) respectively joined to the object and to the support and a release configuration in which said sleeve is transversely separated from at least facing bearing surfaces joined to the object or to the support,
- a chimney (5) elongate in said direction delimiting with said first wall (7) an annular housing and surrounding a central space elongate in this direction and having an open end near the retaining sleeve and a closed end (11), said central space communicating transversely with said annular housing through at least one orifice (15),
- a manoeuvring piston (4) comprising a tubular member (4A) sliding longitudinally in said annular housing and a transverse disk (4B) having a first thrust side bordering at the interior of the first wall a first pressure chamber (9) adapted to communicate with a source of pressure, said manoeuvring piston being mobile longitudinally between a locking configuration in which the tubular member holds the retaining sleeve transversely in its retaining configuration and a release configuration in which said tubular member releases the retaining sleeve so that it is free to assume its release configuration, the pressure in the first pressure chamber operating on the first thrust side in a direction adapted to displace the manoeuvring piston towards its release configuration,
- an ejector piston (6) sliding longitudinally in the central space and comprising a second thrust side (12) delimiting with the closed end of said central space a second pressure chamber (13) the pressure in which operates on said second thrust side in a direction adapted to apply an ejection thrust to the object,
this device being characterised in that the chimney (5) is fixed and the manoeuvring piston comprises a solid portion isolating and sealing off the orifice from the first pressure chamber when said manoeuvring piston is in the locking configuration offset longitudinally from an open portion providing communication between the orifice and the first chamber when said manoeuvring piston is in the release configuration.

2. Device according to claim 1 characterised in that the retaining sleeve comprises an annular plurality of sectors surrounding said bearing surfaces (16, 17) of the object and the support.

3. Device according to claim 2 characterised in that the plurality of sectors and the bearing surfaces are screwthreads.

4. Device according to any one of claims 1 to 3 characterised in that the transverse disk (4B) of the manoeuvring piston (4) is an annular flange projecting towards the interior of the tubular member and sliding along a longitudinal section (20) extending from the closed end of the chimney opposite the object.

5. Device according to claim 4 characterised in that a central chamber (21) inside said longitudinal section is connected to the pressure source (22) and communicates with the first pressure chamber (9) through at least one orifice.

6. Device according to claim 4 characterised in that the open portion is a thinner portion offset transversely relative to the chimney by a longitudinal distance at least equal to the longitudinal offset between the orifices (15) of the second pressure chamber (13) and the first pressure chamber (9).

7. Device according to any one of claims 1 to 3 characterised in that the first pressure chamber is transversely exterior to the tubular member and the open portion (4A'') comprises through-holes.

8. Device according to any one of claims 1 to 7 characterised in that a pin (24) is fixed transversely to the receptacle and passes through the tubular member of the manoeuvring piston by means of a generally longitudinal opening (25), the chimney, and enters a generally longitudinal groove (26).

9. Device according to claim 8 characterised in that the generally longitudinal groove is helical.

## Patentansprüche

1. Vorrichtung zur zeitweiligen Befestigung eines Objekts (A) an einem Träger (B), alsdann zur Auslösung und zum Auswurf dieses Objekts entlang einer vorgegebenen Richtung (X-X), aufweisend:
- eine Aufnahme (2), die dazu bestimmt ist, am Träger befestigt zu werden, und die im Inneren eine erste, entlang dieser Richtung ausgedehnte Wand (7) aufweist,
- einen Haltestutzen (3), aufweisend eine Haltekonfiguration, in der das Objekt longitudinal mit dem Träger durch Zusammenwirken dieses Haltestutzens mit Halteflächen (16, 17) gekoppelt ist, die mit dem Objekt bzw. mit dem Träger verbunden sind, und eine Auslösekonfiguration, in der dieser Stutzen transversal zur Versetzung zumindest gegenüber den entweder mit dem Objekt oder mit dem Träger verbundenen Flächen ist,
- einen entlang der Richtung ausgedehnten Kanal (5), der mit der ersten Wand (7) eine ringförmige Kammer begrenzt und einen entlang dieser Richtung ausgedehnten zentralen Raum umgibt, aufweisend ein nahe dem Haltestutzen gelegenes offenes Ende und ein geschlossenes Ende (11), wobei dieser zentrale Raum durch mindestens eine Öffnung (15) transversal mit dieser ringförmigen Kammer in Verbindung steht,
- einen Betätigungskolben (4), aufweisend ein in dieser ringförmigen Kammer longitudinal verschiebbares röhrenförmiges Element (4A) und eine transversale Scheibe (4B), die eine erste Schubseite hat, die am Inneren der ersten Wand eine erste Druckkammer (9) begrenzt, die dazu bestimmt ist, mit einer Druckquelle in Verbindung zu stehen, wobei dieser Betätigungskolben longitudinal zwischen einer Verriegelungskonfiguration, in der das röhrenförmige Element den Haltestutzen transversal in seiner Haltekonfiguration hält, und einer Entriegelungskonfiguration, in der dieses röhrenförmige Element den Haltestutzen zum Einnehmen seiner Auslösekonfiguration freigibt, bewegbar ist, wobei der Druck in der ersten Druckkammer auf die erste Schubseite in einer Richtung einwirkt, die dafür geeignet ist, den Betätigungskolben zu seiner Entriegelungskonfiguration hin auszulenken,
- einen Auswurfkolben (6), der im zentralen Raum longitudinal verschiebbar ist und eine zweite Schubseite (12) aufweist, die mit dem geschlossenen Ende dieses zentralen Raums eine zweite Druckkammer (13) begrenzt, deren Druck auf diese zweite Schubseite in einer Richtung einwirkt, die dafür geeignet ist, auf das Objekt einen Auswurfschub auszuüben,
welche Vorrichtung dadurch gekennzeichnet ist, daß der Kanal (5) fest ist und der Betätigungskolben, longitudinal versetzt, ein massives Teilstück, das die Öffnung gegenüber der ersten Druckkammer hermetisch abschließt, wenn dieser Betätigungskolben in der Verriegelungskonfiguration ist, und ein ausgekehltes Teilstück aufweist, das die Öffnung mit der ersten Kammer in Verbindung setzt, wenn dieser Betätigungskolben in der Entriegelungskonfiguration ist.

2. Vorrichtung nach Anspruch 1, dadurch gekennzeichnet, daß der Haltestutzen aus einer ringförmigen Vielzahl von Sektoren gebildet wird, die die Flächen (16, 17) des Objekts und des Trägers umgeben.

3. Vorrichtung nach Anspruch 2, dadurch gekennzeichnet, daß die Vielzahl von Sektoren und die Flächen Gewinde sind.

4. Vorrichtung nach einem der Ansprüche 1 bis 3, dadurch gekennzeichnet, daß die transversale Scheibe (4B) des Betätigungskolbens (4) ein ringförmiger Flansch ist, der sich vorkragend zum Inneren des röhrenförmigen Elements hin erstreckt und längs eines longitudinalen Abschnitts (20) verschiebbar ist, der sich vom geschlossenen Ende des Kanals zum dem Objekt gegenüberliegenden Bereich erstreckt.

5. Vorrichtung nach Anspruch 4, dadurch gekennzeichnet, daß im Inneren dieses longitudinalen Abschnitts eine zentrale Kammer (21) angeordnet ist, die mit der Druckquelle (22) verbunden ist und durch mindestens eine Öffnung mit der ersten Druckkammer (9) in Verbindung steht.

6. Vorrichtung nach Anspruch 4, dadurch gekennzeichnet, daß das ausgekehlte Teilstück ein verjüngtes Teilstück ist, das transversal gegenüber dem Kanal auf einer longitudinalen Strecke versetzt ist, die zumindest gleich der longitudinalen Versetzung zwischen den Öffnungen (15) der zweiten Druckkammer (13) und der ersten Druckkammer (9) ist.

7. Vorrichtung nach einem der Ansprüche 1 bis 3, dadurch gekennzeichnet, daß die erste Druckkammer transversal zum Äußeren des röhrenförmigen Elements ist und das ausgekehlte Teilstück (4A'') Eingangslöcher aufweist.

8. Vorrichtung nach einem der Ansprüche 1 bis 7, dadurch gekennzeichnet, daß ein Stift (24) an der Aufnahme transversal befestigt ist und das röhrenförmige Element des Betätigungskolbens durch einen im wesentlichen longitudinalen Spalt (25), den Kanal, kreuzt und in eine im wesentlichen longitudinale Nut (26) eindringt.

9. Vorrichtung nach Anspruch 8, dadurch gekennzeichnet, daß die im wesentlichen longitudinale Nut schraubenförmig ist.
